# EUROPÄISCHE PATENTSCHRIFT

(11) **EP 0 358 045 B1**
(45) Veröffentlichungstag und Bekanntmachung des Hinweises auf die Patenterteilung: **03.11.1993**
(21) Anmeldenummer: 89115533.5
(22) Anmeldetag: 23.08.1989
(51) Int. Cl.: A01D 34/66

(54) **Mähmaschine**
Mowing machine
Faucheuse

(30) Priorität: 05.09.1988 DE 8811183 U
(43) Veröffentlichungstag der Anmeldung: 14.03.1990
(73) Patentinhaber: H. Niemeyer Söhne GmbH & Co. KG, D-48466 Hörstel (DE)
(72) Erfinder: Ungruh, Josef, D-4440 Rheine (DE); Tebbenhoff, Hermann, D-4447 Hopsten (DE)

(56) Entgegenhaltungen:
- DE-A- 2 843 775
- DE-A- 3 324 851
- DE-A- 3 501 123
- DE-B- 1 582 375

## Beschreibung

Die Erfindung bezieht sich auf eine Mähmaschine zum Frontanbau an Traktoren mit zumindest vier quer zur Fahrtrichtung der Mähmaschine nebeneinander angeordneten, im Bereich ihrer unteren Enden an Mähtellern mit Schneidmessern besetzten, um etwa vertikale Achsen drehbar angetriebenen Mähtrommeln in einer Ausbildung nach dem Oberbegriff des Anspruchs 1.

Aus der DE-A-35 01 123 ist solch ein Kreiselmäher für den seitlichen Anbau an Traktoren bekannt, der aus einem Mähbalken besteht, der an seiner Unterseite mehrere Mähtrommeln mit im wesentlichen senkrechte Rotationsachsen aufweist, an deren Unterseiten Schneidwerkzeuge befestigt sind, deren Flugkreise sich überschneiden, wobei die Mähtrommeln von einem Traktor angetrieben werden. Zur Vergrößerung der Arbeitsbreite sollen am Mähbalken mindestens drei Mähtrommeln mit unterschiedlichen Flugkreisdurchmesern der Schneidwerkzeuge angeordnet sein, wobei mindestens eine der Mähtrommeln eine zur Drehrichtung der übrigen Trommeln entgegengesetzte Drehrichtung aufweist. Nachteilig bei einer derartigen Ausführung ist die Behinderung des Mähgutflusses durch die Übergabe des Mähgutes von den kleineren zu den größeren Mähtellern in einem ungünstigen Bereich.

Ferner ist aus der DE-B-15 82 375 ein Kreiselmäher bekannt, bei der mindestens zwei im Abstand nebeneinander angeordnete, um etwa vertikale Drehachsen gleichsinnig antreibbaren, mit Schneidmessern besetzten Mähtrommeln das abgeschnittene Gut nach einer Seite transportieren, wobei der zwischen jeweils zwei Mähtrommeln bestehende freie Spalt durch eine starre Abdeckung mindestens teilweise verschlossen ist. Durch die starre Abdeckung des Spaltes wird das Mähgut abgebremst und der Flug des Mähgutes behindert.

Bei einer bekannten Maschine nach der DE-A1-33 24 851 sind die zwischen den jeweils gleichsinnig rotierenden Mähtrommeln angeordneten überleitorgane als frei rotierende Zuführscheiben ausgebildet, die das Mähgut zur sauberen Schwadbildung von den äußeren Mähtrommeln an die inneren überführen sollen. Insbesondere bei hohen Mähgeschwindigkeiten ist jedoch bei dieser Maschine das in erhöhtem Maße anfallende Mähgut in einem Mähtellerbereich zu übergeben, der noch im Schneidbereich der inneren Mähtrommeln gelegen ist, womit nicht nur unerhebliche Leistungsverluste und ein unsauberes Schnittbild einhergehen, sondern darüber hinaus auf Grund von auftretenden Stauungen bei der Schwadbildung und dadurch bedingten ungleichmäßigen Belastungen, besonders bei größeren Arbeitsbreiten, in nachteiliger Weise beeinflußt wird.

Aufgabe der Erfindung ist es, eine Mähmaschine der eingangs genannten Art zum Frontabau an Traktoren zur Verfügung zu stellen, die mit baulich einfachen Mitteln bei hohen Mähgeschwindigkeiten das Mähgut sicher und leistungsschonend den inneren Mähtrommeln zur Schwadbildung übergeben kann.

Zur Lösung dieser Aufgabe zeichnet sich die Mähmaschine der eingangs genannten Art durch die im kennzeichnenden Teil des Anspruchs 1 angebenen Merkmale aus. Hinsichtlich wesentlicher weiterer Ausgestaltungen wird auf die Ansprüche 2 bis 6 verwiesen.

Durch die jeweils ungleich groß mit zu den äußeren Seitenmaschinenbereichen hin beidseits gleich abnehmenden Durchmessern ausgebildeten Mähtellern ist das Mähgut auch bei höheren Mähgeschwindigkeiten und langem Erntegut in einem Bereich an die inneren Mähtrommeln zu übergeben, der außerhalb der Schneidbereiche der inneren Mähtrommeln und in etwa unterhalb des Maschinenbalkens gelegen ist. Auf Grund der größer ausgebildeten inneren Mähteller bei ansonsten unverändertem Mähtrommeldurchmesser ist zudem der zwischen den beiden gegensinnig rotierenden Mähtrommeln gelegene freie Spalt vergrößert, so daß damit wesentlich bequemer und ohne leistungszehrende Stauungen das geerntete Mähgut sauber im Schwad abgelegt werden kann, ohne daß der Schneidvorgang der inneren Mähtrommel in nachteiliger Weise beeinflußt ist. Durch die zu beiden Seiten parallel zur Fahrtrichtung ausgerichteten Maschinenvertikallängsmittelebene abnehmenden Mähtellerdurchmesser ist das Lenkverhalten des Traktors auch bei Kurvenfahrten und hoher Mähgeschwindigkeit nicht in nachteiliger Weise beeinflußt.

Zur weiteren Erläuterung der Erfindung wird auf die Zeichnung sowie die nachfolgende Beschreibung verweisen. In der Zeichnung zeigen jeweils schematisch:
- Fig. 1 -: Eine Ansicht eines Ausführungsbeispiels einer Mähmaschine nach der Erfindung entgegen der Fahrtrichtung gesehen.
- Fig. 2 -: Eine Draufsicht auf das Ausführungsbeispiel nach Fig.1.
- Fig. 3 -: Ein alternatives Ausführungsbeispiel der Mähmaschine nach der Erfindung entgegen der Fahrtrichtung gesehen.
- Fig. 4 -: Eine Draufsicht auf das Ausführungsbeispiel nach Fig. 3.

In der Zeichnung ist allgemein mit 1 die Mähmaschine beziffert, die in den veranschaulichten Ausführungsbeispielen als Frontmähwerk ausgebildet ist und jeweils beidseits der parallel zur Fahrtrichtung 2 ausgerichteten Maschinenvertikallängsmittelebene 3 zwei Mähtrommeln 4.1,4.2 sowie 5.1,5.2 umfaßt, die an einem Maschinenbalken 6 antreibbar gehaltert sind. Die Mähtrommeln 4.1,4.2,5.1,5.2 haben an ihren unteren Enden Mähteller 6.1,6.2 sowie 7.1,7.2, die Schneidmesser 8 mit sich jeweils überlappenden Schneidbereichen tragen.

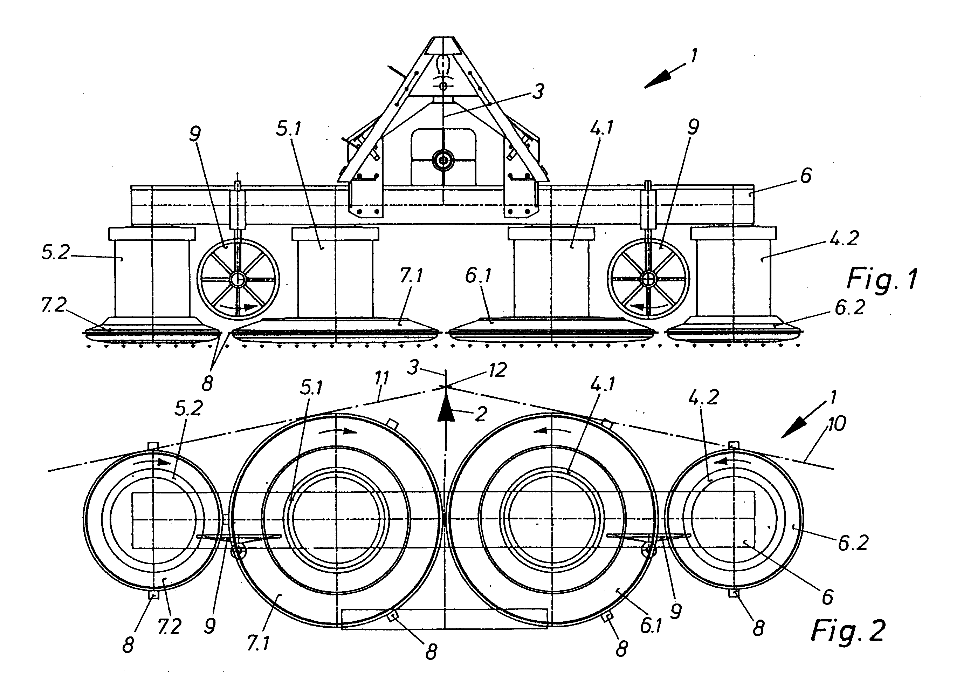

Die beiden beidseits der Maschinenvertikalmittelebene 3 angeordneten Gruppen der Mähtrommeln 4.1,4.2 bzw. 5.1,5.2 laufen in Richtung der veranschaulichten Pfeile gegensinnig um, wobei die Mähtrommeln 4.1 und 4.2 bzw. 5.1 und 5.2 einer Gruppe zum Zusammenführen des Mähgutes zu einem Schwad gleichsinnig rotieren. In dem Spalt zwischen den jeweils gleichsinnig rotierenden Mähtrommeln 4.1, 4.2 bzw. 5.1, 5.2 ist in dem Ausführungsbeispiel nach den Fig. 1 und 2 eine an dem Maschinenbalken 6 gehalterte, frei rotierende, im wesentlichen vertikal ausgerichtete Zuführscheibe als Überleitorgan 9 vorgesehen, das sowohl höhenverstellbar als auch winkelverstellbar ausgebildet sein kann.

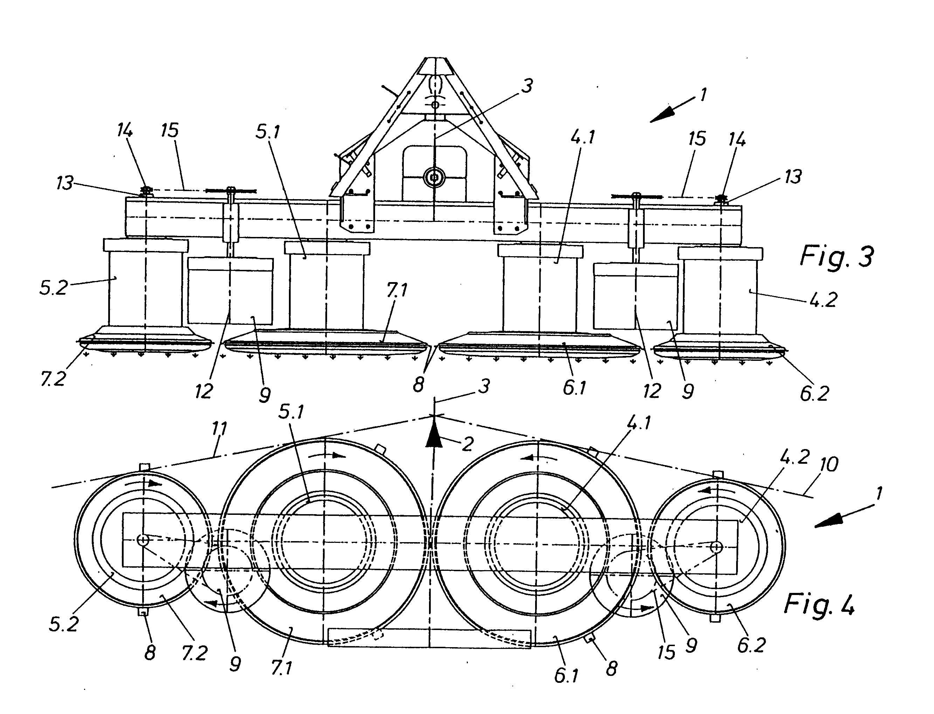

Die Mähteller 6.2 und 7.2 der jeweils beiden äußeren Mähtrommeln 4.2 und 5.2 haben einen geringeren Durchmesser bei ansonsten gleichen Mähtrommelabmessungen als die jeweils benachbarten, gleichsinnig rotierenden inneren Mähtrommeln 5.1 und 4.1 und sind mit einem derart geringeren Durchmesser ausgebildet, daß die in Fig. 2 bzw. in Fig. 4 veranschaulichten gemeinsamen, in Fahrtrichtung vorderen Tangenten 10 und 11 von jeweils zwei Mähtellern die Maschinenvertikalmittelebene 3 unter einem spitzen Winkel schneiden, und zwar in einem gemeinsamen Schnittpunkt. Dadurch läßt sich das in den äußeren Bereichen geerntete Mähgut in einem Bereich an die inneren Mähtrommeln 4.1 und 5.1 übergeben, der nahe der quer zur Fahrtrichtung verlaufenden Maschinenmittellängsachse und damit außerhalb des Schneidbereiches der inneren Mähteller 7.1 und 6.1 gelegen ist. Aufgrund der größeren inneren Mähteller 6.1 und 7.1 ist der Spalt zwischen den beiden inneren Mähtrommeln 4.1 sowie 5.1 größer als die Spalte zwischen den inneren Mähtrommeln 4.1 bzw. 5.1 und den äußeren Mähtrommeln 4.2 bzw. 5.2, so daß insgesamt das Mähgut bequem und leistungsschonend ohne Gefahr von Staubildungen in einem Schwad abgelegt werden kann. Auch bei höheren Mähgeschwindigkeiten ist der Schlepper beeinträchtigungsfrei zu führen.

In dem Ausführungsbeispiel nach den Fig. 3 und 4 ist bei ansonsten analoger Ausbildung das Überleitorgan 9 durch eine im wesentlichen parallel zu den Mähtrommeln ausgerichtete Leittrommel gebildet, die ebenfalls um eine vertikale Achse 12 jeweils gleichsinnig mit den benachbarten Mähtrommeln 4.1,4.2 bzw. 5.1,5.2 antreibbar ist. Dazu ist in dem veranschaulichten Ausführungsbeispiel eine nach oben hin verlängerte Rotorwelle 13 vorgesehen, die stirnendseitig eine Riemenscheibe 14 trägt. Über einen Riementrieb 15 ist von den jeweils beiden äußeren Mähtrommeln 4.2 und 5.2 eine Leittrommel 9 anzutreiben und zwar derart, daß sie mit einer wesentlich geringeren Umfangsgeschwindigkeit als die jeweils treibende Mähtrommel 4.2 bzw. 5.2 rotiert.

In den veranschaulichten Ausführungsbeispielen sind die Mähteller einer Mähtrommelgruppe jeweils mit einem Durchmesserverhältnis von drei zu zwei ausgebildet, wobei die beiden gleichsinnig rotierenden Mähtrommeln 4.1 und 4.2 bzw. 5.1 und 5.2 mit einem diesen Durchmesserverhältnis umgekehrten proportionalen Drehzahlverhältnis antreibbar sind und somit die jeweils innere Mähtrommel 4.1 bzw. 5.1 mit einer Drehzahl von Zweidrittel der Drehzahl der jeweils äußeren Mähtrommeln 4.2 und 5.2 rotiert.

## Patentansprüche

1. Mähmaschine mit mehreren quer zur Fahrtrichtung der Maschine nebeneinander angeordneten, im Bereich ihrer unteren Enden an Mähtellern (6.1,6.2;7.1,7.2) mit Schneidmessern besetzten, um etwa vertikale Achsen drehbar angetriebenen Mähtrommeln (4.1,4.2;5.1,5.2), mit jeweils beidseits der zur Fahrtrichtung (2) hin parallelen Maschinenvertikalmittelebene (3) ein Paar von ungleich großen Mähtellern (6.1,6.2;7.1,7.2) mit jeweils kleineren außen liegenden Mähtellern (6.2,7.2) von denen jedes Paar gleichsinnig umlaufend angeordnet ist, dadurch gekennzeichnet, daß die Maschine als Frontmähwerk ausgebildet ist, die mit einem Durchmesserverhältnis der größeren Mähteller (6.1;7.1) zu den kleineren, außen liegenden Mähtellern (6.2;7.2) von 3:2 ausgebildet ist, die vertikalen Achsen der Mähtrommeln (4.1,4.2;5.1,5.2) in einer Ebene liegen, daß die in Fahrtrichtung (2) vordere gemeinsame Tangente (10,11) eines jeden Paares und ungleich groben Mähtellern (6.1,6.2;7.1,7.2), die in Fahrtrichtung (2) parallele Maschinenvertikalmittelebene (3) in einem gemeinsamen Schnittpunkt unter einem spitzen Winkel schneidet, und daß wenigstens ein zwischen jeweils benachbarten, gleichsinnig rotierenden Mähtrommeln (4.1,4.2;5.1,5.2) oberhalb der Schneidebene und hinter den Schneidbereichen der Schneidmesser angeordnetes den Spalt zwischen den Mähtrommeln (4.1,4.2;5.1,5.2) zumindest teilweise versperrendes Überleitorgan (9) vorgesehen ist.

2. Mähmaschine nach Anspruch 1, dadurch gekennzeichnet, daß die unterschiedliche Durchmesser aufweisenden Mähteller (6.1,6.2;7.1,7.2) von gleichsinnig rotierenden Mähtrommeln (4.1,4.2;5.1,5.2) mit einem dem Durchmesserverhältnis umgekehrt proportionalen Drehzahlverhältnis antreibbar sind.

3. Mähmaschine nach einem der Ansprüche 1 oder 2, dadurch gekennzeichnet, daß das überleitorgan (9) durch eine im wesentlichen parallel zu den Mähtrommeln (4.1,4.2; 5.1,5.2) ausgerichtete Leitscheibe oder -trommel gebildet ist.

4. Mähmaschine nach Anspruch 3, dadurch gekennzeichnet, daß das überleitorgan (9) um eine im wesentlichen vertikale Achse (12) rotierbar ist.

5. Mähmaschine nach Anspruch 4, dadurch gekennzeichnet, daß das überleitorgan (9) von einer Rotorwelle (13) der den kleineren Mähteller (6.2,7.2) aufweisenden Mähtrommel (4.2,5.2) antreibbar ist.

6. Mähmaschine nach Anspruch 5, dadurch gekennzeichnet, daß das überleitorgan (9) über ein Getriebe (14,15) antreibbar ist und mit einer geringeren Geschwindigkeit als die dieses antreibende Mähtrommel (4.2,5.2) rotiert.

## Claims

1. A mower with several cutting drums (4.1,4,2;5.1,5.2) arranged adjacent to each other and across the driving direction of the machine which rotate around approximately vertical axes and are equipped with blades on cutting discs (6.1,6.2;7.1,7.2) at their lower ends, with one pair of unequally dimensioned cutting discs (6.1,6.2;7.1,7.2) on each side of the vertical centre plane (3) of the machine which runs parallel to the driving direction (2), with each such pair comprising a smaller outside cutting disc (6.2,7.2) and rotating in the same direction, characterized in that the machine is designed as a front mower with a diameter ration of 3:2 between the larger cutting discs (6.1,7.1) and the smaller cutting discs (6.2,7.2) located on the outside, that the vertical axes of the cutting drums (4.1,4.2;5.1,5.2) are located in one plane, that the comment tangent (10,11) of each pair at the front when looking in the driving direction and the unequally dimensioned cutting discs (6.1,6.2;7.1,7.2) intersects the vertical centre plane (3) of the machine which is parallel to the driving direction (2), at a common point of intersection by forming an acute angle, and that at least one transmission organ (9) is provided between adjacent cutting drums (4.1,4.2;5.1,5.2) rotating in the same direction, with that organ being located above the cutting plane and behind the cutting areas of the blades and at least partially blocking the gap between the cutting drums (4.1,4.2;5.1,5.2).

2. A mower in accordance with Claim 1, characterized in that the cutting discs (6.1,6.2;7.1,7.2) with an unequal diameter can be driven by cutting drums (4.1,4.2;5.1,5.2) rotating in the same direction, using a speed ratio which is in inverse proportion to the diameter ratio.

3. A mower in accordance with Claim 1 or 2, characterized in that the transmission organ (9) consists of a guide disc or drum which is essentially parallel to the cutting drums (4.1,4.2;5.1,5.2).

4. A mower in accordance with Claim 3, characterized in that the transmission organ (9) is rotatable around an axis (12) which is essentially vertical.

5. A mower in accordance with Claim 4, characterized in that the transmission organ (9) can be driven by a rotary shaft (13) on the cutting drum (4.2,5.2) which is equipped with the smaller cutting disc (6.2,7.2).

6. A mower in accordance with Claim 5, characterized in that the transmission organ (9) can be driven via a gear (14,15) and rotates at a lower speed than the cutting drum (4.2,5.2) driving it.

## Revendications

1. Faucheuse comportant plusieurs tambours de coupe (4.1,4.2;5.1,5.2) juxtaposés transversalement par rapport à la direction de déplacement de la machine et ayant au niveau de leur extrémité inférieure, des disques de coupe (6.1,6.2;7.1,7.2) équipés de couteaux, ces tambours étant entraînés autour d'axes sensiblement verticaux, avec chaque fois de part et d'autre du plan vertical médian de la machine (3), parallèlement a la direction de déplacement (2), une paire de disques de coupe (6.1,6.2;7.1,7.2) de dimensions différentes, comprenant chaque fois un disque extérieur de petite dimension (6.2,7.2), chaque paire de disques tournant dans le même sens, faucheuse caractérisée en ce qu'elle est conçue comme faucheuse frontale dont le rapport des diamètres des grands disques de coupe (6.1,7.1) et des petits disques de coupe (6.2,7.2), extérieurs, est égal a 3/2, les axes verticaux des tambours de coupe (4.1,4.2;5.1,5.2) étant situés dans un plan, et la tangente commune (10,11) avant selon la direction de déplacement (2), de chaques paire de disques de coupe de dimensions différentes (6.1,6.2;7.1,7.2) coupe le plan médian (3) de la machine, parallèle à la direction de déplacement (2), suivant un angle aigu en un point d'intersection commun et au moins entre chaque fois deux tambours de coupe (4.1,4.2;5.1,5.2) voisins, tournant dans le même sens, l'intervalle au-dessus du plan de coupe et derrière les zones de coupe des couteaux, entre les tambours (4.1,4.2;5.1,5.2) est garni d'un organe de transfert (9) fermant au moins partiellement cet intervalle.

2. Faucheuse selon la revendication 1, caractérisée en ce que les disques de coupe (6.1,6.2;7.1,7.2) de diamètres différents des tambours (4.1,4.2;5.1,5.2) tournant dans le même sens, sont entraînés en rotation suivant un rapport de vitesses de rotation inversement proportionnel au rapport des diamètres.

3. Faucheuse selon l'une des revendications 1 à 3, caractérisée en ce que l'organe de transfert (9) est constitué par un disque de guidage ou tambour aligné essentiellement parallèlement au tambour de fauche (4.1,4.2;5.1,5.2).

4. Faucheuse selon la revendication 3, caractérisée en ce que l'organe de transfert (9) tourne autour d'un axe (12) pratiquement vertical.

5. Faucheuse selon la revendication 4, caratérisée en ce que l'organe de transfert (9) est entraîné par l'axe de rotor (13) du tambour (4.2,5.2) correspondant au petit disque de coupe (6.2,7.2).

6. Faucheuse selon la revendication 5, caractérisée en ce que l'organe de transfert (9) est entraîné par l'intermédiaire d'une transmission (14,15) et tourne a une vitesse plus faible que celle du tambour de coupe, entraîné (4.2,5.2).
